# EUROPEAN PATENT SPECIFICATION

(11) **EP 3 858 576 B1**
(45) Date of publication and mention of the grant of the patent: **27.07.2022**
(21) Application number: 21153899.6
(22) Date of filing: 28.01.2021
(51) Int. Cl.: B29C 45/76

(54) **INJECTION MOLDING MACHINE**
SPRITZGIESSMASCHINE
MACHINE DE MOULAGE À INJECTION

(30) Priority: 31.01.2020 JP 2020015465
(43) Date of publication of application: 04.08.2021
(73) Proprietor: Sumitomo Heavy Industries, Ltd., Tokyo 141-6025 (JP)
(72) Inventor: YOSHIOKA, Yutaro, Chiba-shi, Chiba, 263-0001, (JP); TANIDA, Kazuki, Chiba-shi, Chiba, 263-0001, (JP)
(74) Representative: Louis Pöhlau Lohrentz

(56) References cited:
- EP-A1- 3 546 181
- EP-A1- 3 715 088
- JP-A- 2002 086 530
- US-A1- 2004 088 073
- US-A1- 2013 277 885
- US-A1- 2018 311 878

## Description

### BACKGROUND OF THE INVENTION

### Field of the Invention

The present invention relates to an injection molding machine.

### Description of Related Art

In the related art, an operator sets a molding condition or the like of an injection molding machine while referring to a material such as a procedure manual. The material is provided as a printed matter or an electronic material (including a moving image) which can be displayed on a display unit of the injection molding machine.

Japanese Patent No. 4658131 discloses a molding system which accesses a memory device which stores mold setup data or the like related to a molding product. Moreover, Japanese Patent No. 4658131 discloses a molding machine system in which the memory device can also include an instruction manual and related technical data and a machine controller selectively accesses the instruction manual and related technical data so that a reference document can be displayed on a human-machine interface. United States Patent Publication No. 2004/088073 discloses a display apparatus of an injection molding machine, which displays various settings of molding conditions and monitoring values of an injection molding machine. United States Patent Publication No. 2018/311878 discloses a plastic injection-molding machine including a machine controller which includes a data memory for storing text information and/or image information in the form of data sets, and which includes a process generator for manually assigning each state parameter of the plastic injection-molding machine a data set. United States Patent Publication No. 2013/277885 discloses a control device comprising a human-machine interface unit used in a molding machine. European Patent Publication No. 3 546 181 discloses a controller of an injection molding machine and an injection molding machine. Japanese Patent Publication No. 2002-086530 discloses a control device for an injection molding machine having a function of displaying memo data on a memo screen.

### SUMMARY OF THE INVENTION

Meanwhile, when a material such as the procedure manual is created, for example, the operator takes a screenshot for each display screen, saves image data in an external storage medium, and creates the material using a personal computer or the like. In addition, the operator connects a controller of the injection molding machine to the personal computer, remotely operates the controller from the personal computer, and shoots a moving image of the display screen to create the document as a moving image. Therefore, there is a problem that it takes time to create the material.

Therefore, an object of the present invention is to provide an injection molding machine which supports creation of a material.

According to an aspect of the present invention, there is provided an injection molding machine including: an operation unit which receives an operation of a display screen and/or an operation for operating the injection molding machine; and a controller which performs a control according to the operation received by the operation unit, in which the controller includes a manual creation unit which creates a procedure manual related to the operation received by the operation unit based on the operation received by the operation unit.

According to the present invention, it is possible to provide an injection molding machine which supports creation of a material.

### BRIEF DESCRIPTION OF THE DRAWINGS

Fig. 1 is a view showing a state when mold opening of an injection molding machine according to an embodiment is completed.
Fig. 2 is a view showing a state when a mold of the injection molding machine according to the embodiment is clamped.
Fig. 3 is a functional block diagram of a controller.
Fig. 4 is an example of a display screen displayed on a display unit.
Fig. 5 is an example of a flowchart when a manual is created.
Fig. 6 is an example of a setup selection screen.
Fig. 7 is an example of the display screen displayed on the display unit.
Fig. 8 is an example of the display screen displayed on the display unit.
Fig. 9 is an example of a manual created by a manual creation unit.
Fig. 10 is an example of a composite screen generated by the manual creation unit.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

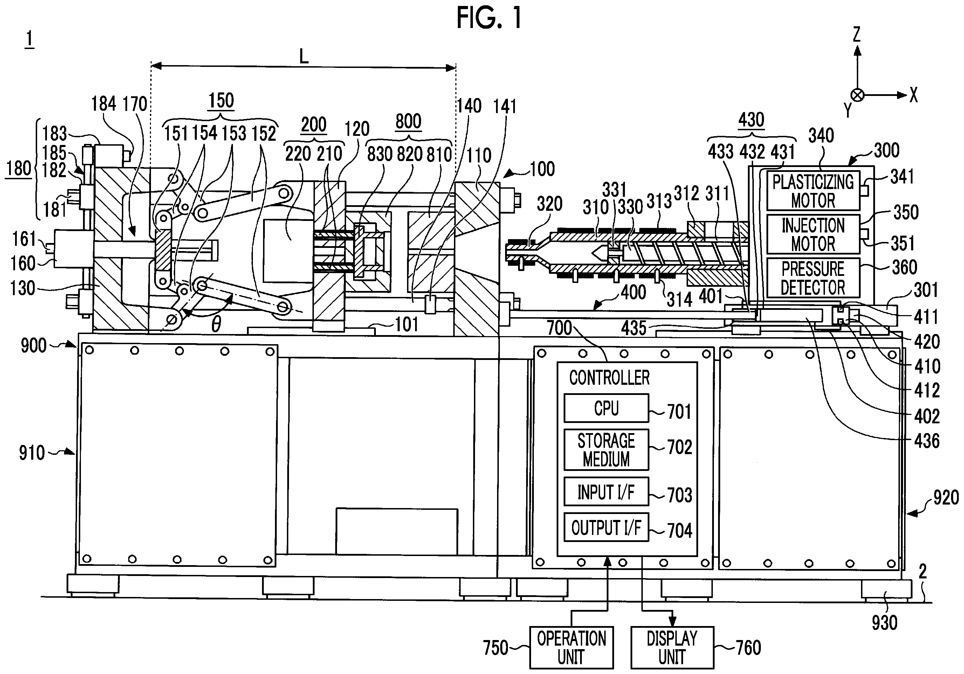

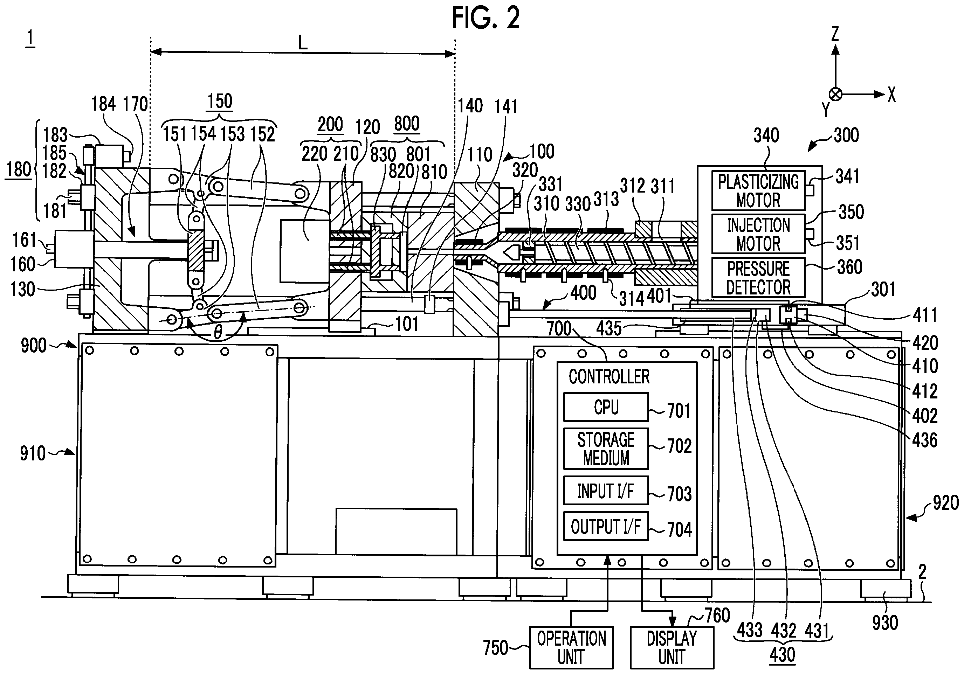

Fig. 1 is a view showing a state when mold opening of an injection molding machine according to an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 1. A negative side in the Y-axis direction is referred to as an operation side, and a positive side in the Y-axis direction is referred to as a counter operation side.

As shown in Figs. 1 to 2, the injection molding machine 1 includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 1, and a frame 900 which supports each component of the injection molding machine 1. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 1 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110 to which the stationary mold 810 is attached, a movable platen 120 to which the movable mold 820 is attached, a toggle support 130 which is disposed with a gap from the stationary platen 110, a tie bar 140 which connects the stationary platen 110 and the toggle support 130 to each other, a toggle mechanism 150 which moves the movable platen 120 with respect to the toggle support 130 in the mold opening and closing directions, a mold clamping motor 160 which operates the toggle mechanism 150, a motion conversion mechanism 170 which converts a rotary motion of the mold clamping motor 160 into a linear motion, and a mold space adjustment mechanism 180 which adjusts a gap between the stationary platen 110 and the toggle support 130.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed with a gap from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with a gap L therebetween in the mold opening and closing directions by the tie bar 140. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to as a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 are used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward and rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 has a cylinder 310 which heats the molding material, a nozzle 320 which is provided on a front end portion of the cylinder 310, a screw 330 which is disposed to be rotatable and movable forward or rearward in the cylinder 310, a plasticizing motor 340 which rotates the screw 330, an injection motor 350 which moves the screw 330 forward or rearward, and a pressure detector 360 which detects a force transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and is pressed against the mold unit 800. The heating unit 313 and the temperature measurer 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, when the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating the detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating the detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to as a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating the detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servomotor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flowpath 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the molding clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process . The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process. Moreover, the ejection process may be started during the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 1 and a current state of the injection molding machine 1 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 1 (including inputting the set value) or the like. Further, the user operates the input operation unit provided on the display screen, and thus, can operate the injection molding machine 1 corresponding to the input operation unit. Moreover, for example, the operation of the injection molding machine 1 may be an operation (including stopping) of the mold clamping unit 100, the ejector unit 200, the injection unit 300, the moving unit 400, or the like. Further, the operation of the injection molding machine 1 may be switching of the display screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### <Material Creation Function>

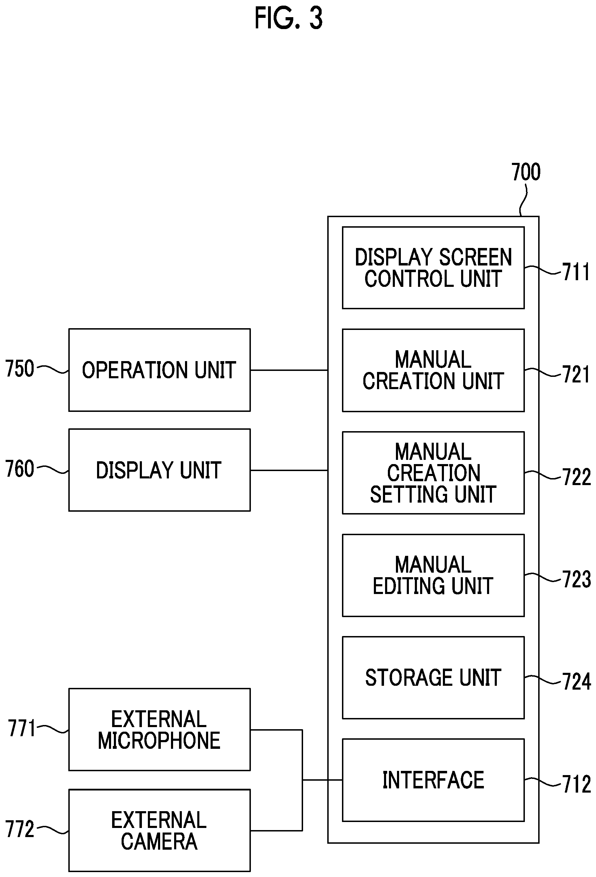

The controller 700 has a material creation function for creating a material (hereinafter, also referred to as a "manual") such as a procedure manual. The material creation function of the controller 700 will be described with reference to Fig. 3. Fig. 3 is a functional block diagram of the controller 700. The manual to be created may be created as a document file or a moving image file. Further, the material (manual) to be created is not limited to the procedure manual, and may include a material for reporting an abnormality or malfunction of the injection molding machine 1. Further, an operation record desired by the user may be created as a material.

The controller 700 includes a display screen control unit 711 which generates a display screen and displays the display screen on the display unit 760, a manual creation unit 721 which creates the manual, a manual creation setting unit 722 which sets manual creation, a manual editing unit 723 which edits the manual, and a storage unit 724 which stores the created manual or the like. The controller 700 is connected to the operation unit 750 which receives an operation of the user. The operation to the operation unit 750 is input to the controller 700. The controller 700 is connected to the display unit 760 which displays the display screen. The controller 700 generates the display screen, and causes the display unit 760 to display the generated display screen.

The display screen control unit 711 generates the display screen to be displayed on the display unit 760 based on the operation of the operation unit 750 by the user, and causes the display unit 760 to display the generated display screen.

The manual creation unit 721 creates the manual based on the operation received by the operation unit 750. Specifically, the manual creation unit 721 captures a still image and/or a moving image of the operation received by the operation unit 750, and creates the manual including the captured still image and/or moving image . The created manual is stored in the storage unit 724.

The manual creation setting unit 722 displays a setting screen for inputting a setting when the manual is created on the display unit 760 and performs the setting, based on the operation of the operation unit 750 by the user. The setting is stored in the storage unit 724.

The manual editing unit 723 edits the manual created by the manual creation unit 721 based on the operation of the operation unit 750 by the user. Editing the manual includes viewing, editing, deleting, duplicating (external output) of a file, or the like.

The storage unit 724 stores the created manual and the setting for creating the manual.

Further, the controller 700 may include an interface 712. For example, the interface 712 is configured so that an external microphone 771 and an external camera 772 can be connected thereto. For example, the external microphone 771 acquires a voice when the operator operates the operation unit 750. Voice information acquired by the external microphone 771 is input to the controller 700 via the interface 712. For example, the external camera 772 captures work (for example, work of attaching the mold unit) of the operator as a still image and/or a moving image. Image information captured by the external camera 772 is input to the controller 700 via the interface 712. Further, the interface 712 may be configured so that an external storage medium (not shown) can be connected thereto. For example, the manual created by the controller 700 can be stored in the external storage medium.

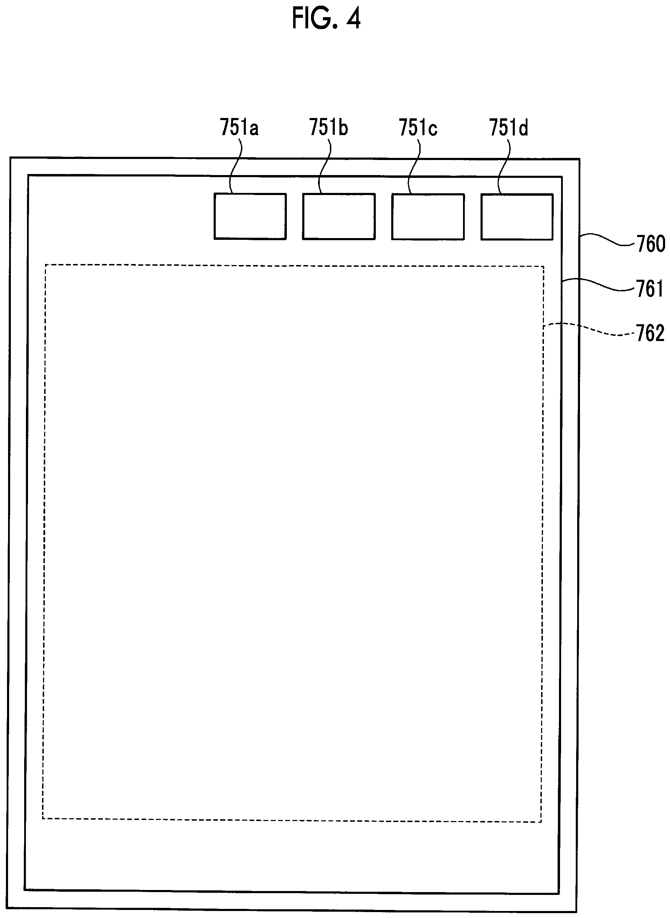

Fig. 4 is an example of the display screen displayed on the display unit 760. Here, the operation unit 750 and the display unit 760 are constituted by a touch panel, and an operation button or the like as the operation unit 750 is disposed on the display screen.

A display screen 761 is displayed on the display unit 760. The display screen 761 is provided with a display section 762. Various setting items or the like are displayed on the display section 762. The user can input the molding condition of the injection molding machine 1 by operating a button provided on the display section 762 or by inputting a numerical value or the like into an input field. Further, the user can confirm the setting or the like by displaying various information on the display section 762.

Further, the display screen 761 includes a manual creation button 751a, a pause button 751b, a manual creation setting button 751c, and a manual confirmation button 751d.

The manual creation button 751a is a button for starting or ending manual creation. The pause button 751b is a button which is operated during the manual creation to pause the manual creation and is operated during the pause to resume the manual creation. The manual creation setting button 751c is a button for starting the setting when the manual creation is created. The manual confirmation button 751d is a button for starting the manual editing.

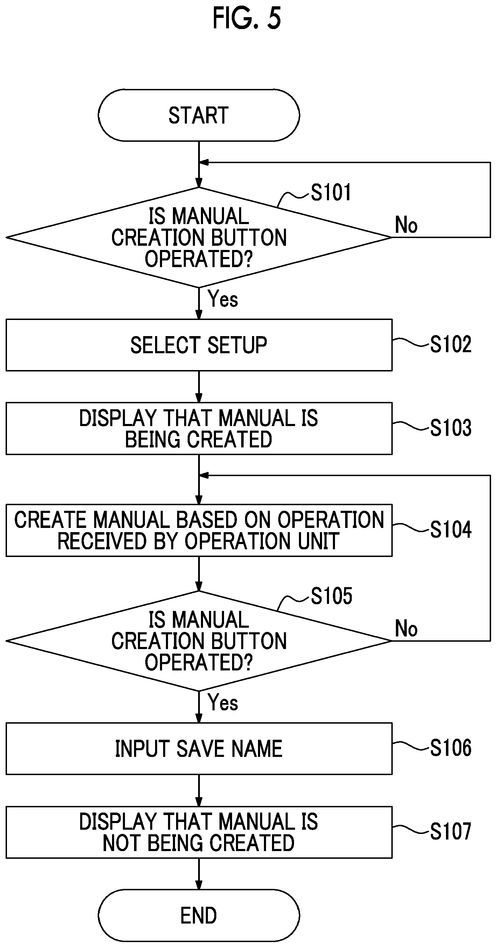

Next, the creation of the manual by the controller 700 will be described with reference to Fig. 5. Fig. 5 is an example of a flowchart when the manual is created.

When the user operates the manual creation button 751a, the manual creation unit 721 of the controller 700 starts the manual creation. First, in Step S101, the manual creation unit 721 determines whether or not the manual creation button 751a is operated. When the manual creation button 751a is not operated (No in S101), the processing of the controller 700 repeats Step S101. When the manual creation button 751a is operated (Yes in S101), the processing of the controller 700 proceeds to Step S102.

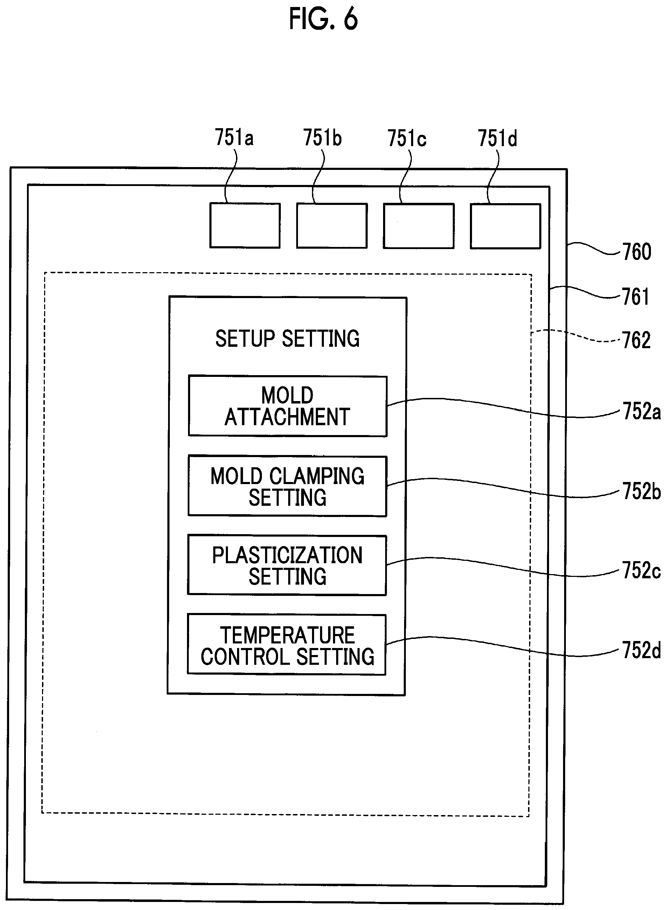

In Step S102, the display screen control unit 711 of the controller 700 causes the display unit 760 to display a screen for selecting setup. Fig. 6 is an example of a setup selection screen. Here, the setup of the injection molding machine 1 for creating the manual is selected. In the example shown in Fig. 6, setup buttons 752a to 752d are displayed on the display unit 760. The setup button 752a is a button for starting creation of a mold attachment manual. The setup button 752b is a button for starting creation of a manual for setting the mold clamping of the mold unit 800. The setup button 752c is a button for starting creation of a manual for a plasticization setting of the injection unit 300. The setup button 752d is a button for starting creation of a manual for setting a temperature control of the injection unit 300. When the user operates any of the setup buttons 752a to 752d, the processing of the controller 700 proceeds to Step S103.

In Step S103, the display screen control unit 711 displays that the manual is being created. For example, a color of an icon of the manual creation button 751a is changed from green to red. Accordingly, the user can easily determine whether or not the manual is being created.

During the creation of the manual, the user operates the button provided on the display section 762 according to a procedure desired to be registered in the manual, or inputs a numerical value or the like in an input field. In Step S104, the manual creation unit 721 stores the operation of the user received by the operation unit 750 in the storage unit 724, and creates the manual based on the recorded operation of the user. The manual creation unit 721 may include an image of the display screen in the manual to be created. Further, the manual creation unit 721 may generate character information based on the operation received by the operation unit 750, and may include the generated character information in the created manual. Further, the manual creation unit 721 may include the voice information recorded by the external microphone 771 in the manual to be created. Further, the manual creation unit 721 may include the moving image information captured by the external camera 772 in the manual to be created. Further, the manual creation unit 721 may convert the voice information recorded by the external microphone 771 into character information and include the converted character information in the manual to be created.

If the pause button 751b is operated during the manual creation, the manual creation unit 721 pauses the manual creation. During the pause, the operation by the user is not registered in the manual. If the pause button 751b is operated during the pause, the manual creation unit 721 resumes the manual creation.

When the input of the procedure to be registered in the manual ends, the user operates the manual creation button 751a to end the manual creation. Accordingly, the registration of the operation by the user in the manual is completed. In Step S105, the manual creation unit 721 determines whether or not the manual creation button 751a is operated. When the manual creation button 751a is not operated (No in S105), the processing of the controller 700 repeats Step S104. When the manual creation button 751a is operated (Yes in S105), the processing of the controller 700 proceeds to Step S106.

In Step S106, the manual creation unit 721 causes the display unit 760 to display an input screen for inputting a save name of the created manual. When the input is completed, the manual creation unit 721 stores the manual in the storage unit 724. Then, the processing of the controller 700 proceeds to Step S107.

In Step S107, the display screen control unit 711 displays that the manual is not being created. For example, the color of the icon of the manual creation button 751a is changed from red to green. Accordingly, the user can easily determine that the manual setting is not being operated.

As described above, in the injection molding machine 1 according to the present embodiment, the operation record material (manual) such as the procedure manual can be easily created. That is, after the user operates the manual creation button 751a to start the creation of the manual, the user operates the operation unit 750 according to the procedure desired to be registered in the manual. Accordingly, the user can easily create the manual.

In the present embodiment, while the manual creation button 751a is operated in Step S101 and the manual creation button 751a is operated again in Step S105, the manual creation unit 721 stores the operation by the user received by the operation unit 750 in the storage unit 724 and creates the manual based on the recorded operation of the user (S104). However, the present invention is not limited to this.

The reception of the operation and the creation of the manual may be separated from each other. That is, while the manual creation button 751a is operated in Step S101 and the manual creation button 751a is operated again in Step S105, the manual creation unit 721 stores the operation received by the operation unit 750 in the storage unit 724. Then, when the manual creation button 751a is operated in Step S105, the manual creation unit 721 may end the storage of the operation and create the manual based on the operation stored in the storage unit 724.

Further, while the manual creation button 751a is operated in Step S101 and the manual creation button 751a is operated again in Step S105, the manual creation unit 721 creates an outline of the manual based on the operation received by the operation unit 750 and stores the created outline of the manual is stored in the storage unit 724. Then, when the manual creation button 751a is operated in Step S105, the manual creation unit 721 may end the creation of the outline of the manual and edit the manual based on the outline of the manual stored in the storage unit 724.

Then, the manual creation unit 721 may output the created manual (store the created manual in the storage unit 724, store the created manual in the external storage medium, or display the created manual on the display unit 760).

The manual creation button 751a functions as a storage start operation unit for storing the operation received by the operation unit 750 in the storage unit 724. Further, the manual creation button 751a functions as a manual creation start operation unit for creating (editing) the manual based on the operation stored in the storage unit 724. Further, the manual creation button 751a functions as a manual output start operation unit for outputting the created manual.

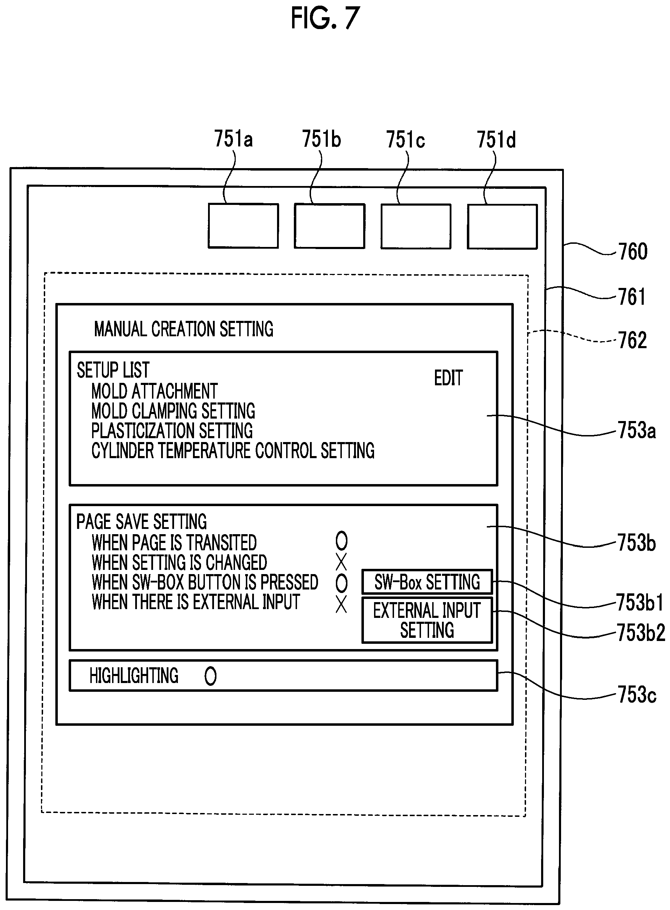

Next, the setting for manual creation will be described with reference to Fig. 7. Fig. 7 is an example of the display screen displayed on the display unit 760. When the user operates the manual creation setting button 751c, the display screen shown in Fig. 7 is displayed.

In a setup list 753a, a list of setups which can be selected in Step S102 of Fig. 5 is displayed. As for the setup, in addition to a basic setup registered in advance, the user can newly set an arbitrary setup. The setup list itself may not be available. In this case, the user may create a desired operation record as a material. In this case, when the manual (operation record) creation button is operated (S101), the creation of the operation record is started (S103, S104).

In a page save setting 753b, a save operation of the display screen when saving the display screen as the manual can be set. For example, in "when the page is transited", when the display screen is switched, whether or not to save the display screen immediately before the switching and add the display screen to the manual is set. Accordingly, for example, there is a transition button on the display screen before the switching, and when being switched to the display screen after the switching by operating the transition button on the display screen, the display screen (the display screen on which the transition button to be operated is displayed) before the switching can be included in the manual. "When the setting is changed" sets whether or not to save the display screen and add the display screen to the manual immediately after saving the setting. "When a SW-Box button is operated" sets whether or not to add to the manual that a switch box is operated when a button in the switch box is operated. Further, by operating a setting button 753b1, it is possible to set whether or not to save the display screen when the operation of the switch box is added to the manual and add the saved display screen to the manual. The button of the switch box is a button for operating the injection molding machine 1 or constituent devices of the injection molding machine 1, and for example, is a button for causing the controller 700 to move the injection unit 300 forward or rearward, perform molding opening or mold closing of the mold unit 800 by the mold clamping unit 100, or the like. Further, the button of the switch box may be disposed on the touch panel. "When there is an external input" sets whether or not to add the external input to the manual when being input from an arbitrarily selected external input unit (for example, external microphone 771 and external camera 772). Further, by operating the setting button 753b2, it is possible to set whether or not to save the display screen when the external input is added to the manual and add the saved display screen to the manual.

In a highlighting 753c, it is set whether or not to highlight a changed portion when a numerical value or the like is changed. When the highlighting is selected, an icon or a highlight frame for clarifying the changed portion on the saved display screen is superimposed and displayed.

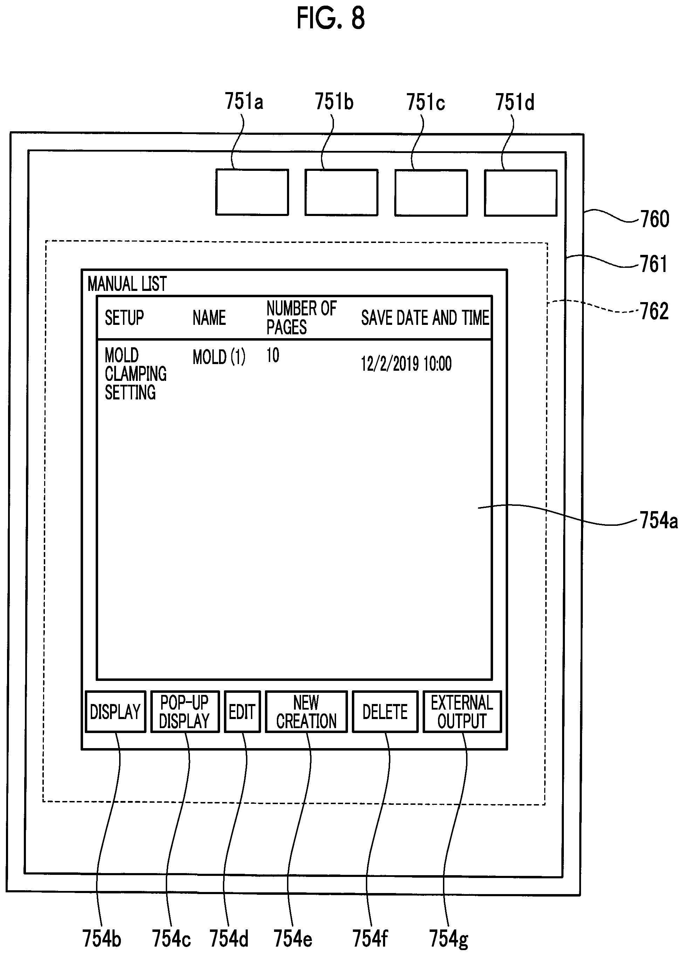

Next, a display screen for confirming the created manual will be described with reference to Fig. 8. Fig. 8 is an example of the display screen displayed on the display unit 760. When the user operates the manual confirmation button 751d, the display screen shown in Fig. 8 is displayed.

In a manual list 754a, a list of manuals stored in the storage unit 724 of the injection molding machine 1 is displayed.

The display button 754b is a button for displaying the manual selected in the manual list 754a in full screen.

The pop-up display button 754c is a button for display the manual selected in the manual list 754a in a pop-up display manner . Accordingly, it is possible to operate the setting screen while referring to the manual displayed in the pop-up display manner.

An edit button 754d is a button for starting editing of the manual selected in the manual list 754a. In the editing of the manual, it is possible to replace a page, delete a page, add a page, add a memo (comment), add highlighting, or the like. Further, when a page is added, the image stored in the injection molding machine 1, the image/moving image of the external storage medium connected to the interface 712, or the like can be inserted.

A new creation button 754e is a button for creating a new manual. While the manual creation button 751a (refer to Fig. 4 or the like) creates the manual based on the operation of the display screen, the new creation button 754e can create a manual which does not depend on the display screen. When the manual creation starts from the manual creation button 751a, an image, a moving image, or the like of the external storage medium connected to the interface 712 can be inserted into the manual.

A delete button 754f is a button for deleting the manual selected in the manual list 754a.

An external output button 754g is a button for duplicating (externally outputting) the manual selected in the manual list 754a to the external storage medium connected to the interface 712. The external output of the manual is not limited to the output via the external storage medium, and the manual may be output from the controller 700 an external terminal by connecting the controller 700 and an external terminal such as a personal computer to each other via a network.

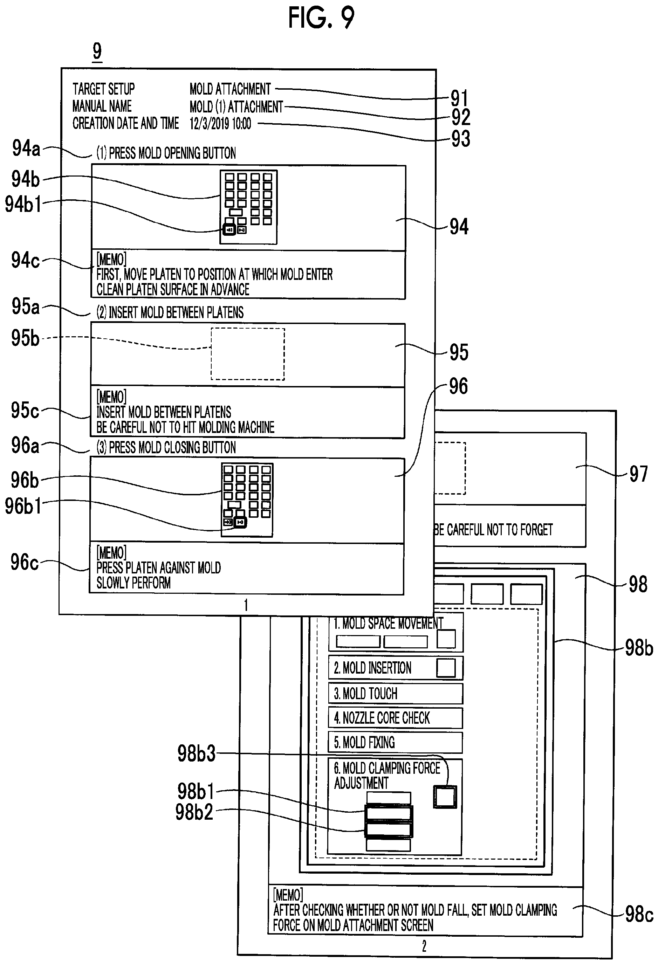

Fig. 9 is an example of a manual 9 created by the manual creation unit 721. Here, a case where the manual is created as a document file by the controller 700 will be described as an example. Further, the manual 9 shown in Fig. 9 may be viewable on the display unit 760 of the injection molding machine 1, or may be viewable as a printed paper medium.

The manual 9 describes a target setup 91 selected in Step S102. Further, a manual name 92 input in Step S106 is described. In addition, creation date and time 93 of the material are described.

Further, in the manual 9, pages 94 to 98 are described corresponding to the operation in Step S104. One page 94 includes operation information 94a, media information 94b, and memo information 94c. The same applies to pages 95 to 98.

In the operation information 94a, an order of the operations of the user and the operations of the user are described as character information. Here, it is assumed that the user operates the "mold opening button" of the operation unit 750 (switch box). The manual creation unit 721 generates a text of the operation information 94a based on the operation of the operation unit 750. The manual creation unit 721 has a database (not shown) in which the operation of the operation unit 750 and the text of the operation information 94a are associated with each other, and may output the text of the operation information 94a based on the operation of the operation unit 750.

The media information 94b displays the display screen of the display unit 760, the image (still image/moving image) captured by the external camera 772, or the like. The manual creation unit 721 has a database (not shown) in which the operation of the operation unit 750 with a type of the media information 94b are associated with each other, and may select and acquire the media information 94b to be used based on the operation of the operation unit 750.

For example, when the "mold opening button" of the switch box is operated as shown in the page 94, the manual creation unit 721 describes an image obtained by superimposing and displaying a highlighting 94b1 indicating the mold opening button on the image of the switch box stored in advance, as the media information 94b.

Further, when the "mold is inserted between the platens" as shown in the page 95, the image captured by the external camera 772 is described as the media information 94b. The image is not limited to the image captured by the external camera 772, and an imaged image may be described as the media information 94b. For example, the imaged image is stored in the storage unit 724 in advance. Further, when the "mold closing button" of the switch box is operated as shown in the page 96, the manual creation unit 721 describes an image obtained by superimposing and displaying a highlighting 96b1 indicating the mold closing button on the image of the switch box stored in advance, as media information 96b. When a set value of the display screen is changed as shown in the page 98, the manual creation unit 721 saves the display screen of the display unit 760 and describes the saved display screen as media information 98b. Further, when the display screen is described in the manual 9, the highlighting 98b1, 98b2, 98b3 may be described so that the changed portion or the operation portion can be easily specified.

Text information is described in the memo information 94c. Here, the manual creation unit 721 may generate the text of the memo information 94c based on the operation of the operation unit 750. The manual creation unit 721 has a database (not shown) in which the operation of the operation unit 750 and the text of the memo information 94c are associated with each other, and may output the text of the memo information 94c based on the operation of the operation unit 750. Further, a text input to an edit screen called by the edit button 754d shown in Fig. 8 may be output as the memo information 94c.

As described above, in the injection molding machine 1 according to the present embodiment, the operation record material (manuals) such as the procedure manual can be easily created. Accordingly, for example, it is possible to reduce a creation load such as capturing a screenshot for each display screen, saving the captured display screen in the external storage medium, and creating the manual using an external terminal such as a personal computer.

Hereinbefore, the embodiment of the injection molding machine 1 or the like is described. However, the present invention is not limited to the embodiment or the like, and various modifications and improvements are possible within the scope of the present invention described in claims.

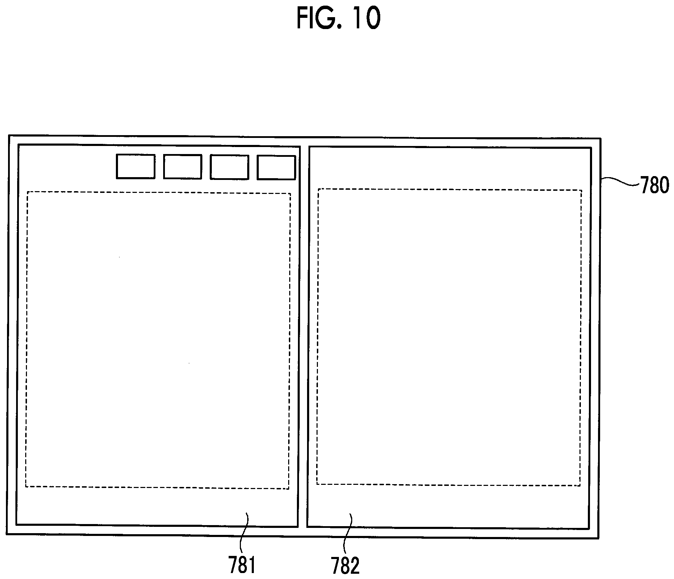

The manual creation unit 721 includes the image/moving image of the display screen displayed on the display unit 760 when the operation unit 750 is operated in the operation record material (manual) to be created. However, the present invention is not limited to this. Fig. 10 is an example of a composite screen 780 generated by the manual creation unit 721. The manual creation unit 721 may include image/moving image of the composite screen 780, which is a composite of a display screen 781 actually displayed on the display unit 760 and an extended screen 782 not displayed on the display unit 760, in the material to be created. For example, in addition to the display screen 781 which is operated or displayed, a waveform display screen which displays time deviation of detection values detected by various sensors or an actual value display screen which displays actual values of the injection molding machine 1 can be included in the material as the extended screen 782. Accordingly, not only the material such as the procedure manual but also the material for reporting abnormalities or malfunctions of the injection molding machine 1 can be easily created.

Further, the manual created by the controller 700 may be a moving image file. In this case, when the manual creation button 751a is operated by the user, the manual creation unit 721 starts recording of the display screen 761. In addition, the voice recorded by the external microphone 771 connected to the interface 712 may also be recorded. Then, when the manual creation button 751a is operated again by the user, the manual creation unit 721 ends the recording of the display screen 761. Accordingly, the operation record material (manual) such as the procedure manual can be easily created as a moving image file.

Further, the controller 700 may have a function of editing the moving image file created as the operation record material (manual) such as the procedure manual. For example, the controller 700 may have a moving image editing function such as trimming a moving image, combining a plurality of moving images, adding a text or a figure in the moving image, and inserting a title. Further, the voice information acquired by the external microphone 771 may be converted into text, and the converted text may be included in the moving image to be created. The text may be superimposed and displayed on the recorded display screen or may be displayed in a margin of the recorded display screen.

### Brief Description of the Reference Symbols

1: injection molding machine
9: manual (material)
700: controller
711: display screen control unit
721: manual creation unit
722: manual creation setting unit
723: manual editing unit
724: storage unit
712: interface
750: operation unit
760: display unit
771: external microphone
772: external camera
761: display screen
762: display section
751a: manual creation button (start operation unit)
751c: manual creation setting button
751d: manual confirmation button

## Claims

1. An injection molding machine (1) comprising:
an operation unit (750) configured to receive an operation of a display screen (761, 781) and/or an operation for operating the injection molding machine (1); and
a controller (700) configured to perform a control according to the operation received by the operation unit (750),
**characterized in that**
the controller (700) includes a manual creation unit (721) which is configured to create a procedure manual (9) related to the operation received by the operation unit (750) based on the operation received by the operation unit (750).

2. The injection molding machine (1) according to claim 1,
wherein the manual creation unit (721) is configured to create the procedure manual (9) including a still image and/or a moving image of the operation received by the operation unit (750).

3. The injection molding machine (1) according to claim 1 or 2,
wherein the manual creation unit (721) is configured to generate character information based on the operation received by the operation unit (750), and create the procedure manual (9) including the character information.

4. The injection molding machine (1) according to any one of claims 1 to 3,
wherein the manual creation unit (721) is configured to create the procedure manual (9) including voice information recorded by an external microphone (771).

5. The injection molding machine (1) according to claim 4,
wherein the manual creation unit (721) is configured to convert the voice information recorded by the external microphone (771) into character information and create the procedure manual (9) including the character information.

6. The injection molding machine (1) according to any one of claims 1 to 5,
wherein the manual creation unit (721) is configured to create the procedure manual (9) including image information captured by an external camera (772).

7. The injection molding machine (1) according to any one of claims 1 to 6,
wherein the manual creation unit (721) is configured to create the procedure manual (9) including a composite screen of the display screen (761, 781) displayed on a display unit (760) when the operation unit (750) is operated and an extended screen (782) not displayed on the display unit (760) when the operation unit (750) is operated.

8. The injection molding machine (1) according to any one of claims 1 to 7,
wherein the controller (700) has a storage unit (724) which stores the operation received by the operation unit (750), and
the manual creation unit (721) is configured to create the procedure manual (9) based on the operation stored in the storage unit (724).

9. The injection molding machine (1) according to any one of claims 1 to 8,
wherein the operation unit (750) has a start operation unit (751a) which starts creation of the procedure manual (9), and
when the start operation unit (751a) is operated, the manual creation unit (721) starts the creation of the procedure manual (9).

10. The injection molding machine (1) according to any one of claims 1 to 9,
wherein the display screen (761, 781) has an input field to which an input value is input by the operation unit (750), and
when the input value is input to the input field, the manual creation unit (721) includes the display screen (761, 781) after the input in the procedure manual (9).

11. The injection molding machine (1) according to any one of claims 1 to 10,
wherein the operation unit (750) has a switching operation unit for switching the display screen (761, 781),
the controller (700) has a display screen control unit (711) which controls the display screen (761, 781),
when the switching operation unit is operated, the display screen control unit (711) switches the display screen (761, 781), and
when the switching operation unit is operated, the manual creation unit (721) includes the display screen (761, 781) before switching in the procedure manual (9).

## Patentansprüche

1. Spritzgießmaschine (1), umfassend:
eine Bedienungseinheit (750), die zum Empfangen einer Bedienung auf einem Anzeigebildschirm (761, 781) und/oder einer Bedienung zum Bedienen der Spritzgießmaschine (1) konfiguriert ist; und
eine Steuerung (700), die konfiguriert ist, gemäß einer von der Bedienungseinheit (750) empfangenen Bedienung eine Steuerung durchzuführen,
**dadurch gekennzeichnet, dass**
die Steuerung (700) eine Handbucherstellungseinheit (721) umfasst, die konfiguriert ist, basierend auf der von der Bedienungseinheit (750) empfangenen Bedienung ein Verfahrenshandbuch (9), das die von der Bedienungseinheit (750) empfangene Bedienung betrifft, zu erstellen.

2. Spritzgießmaschine (1) nach Anspruch 1,
wobei die Handbucherstellungseinheit (721) konfiguriert ist, das Verfahrenshandbuch (9) einschließlich eines Standbilds und/oder eines Bewegtbilds der von der Bedienungseinheit (750) empfangenen Bedienung zu erstellen.

3. Spritzgießmaschine (1) nach Anspruch 1 oder 2,
wobei die Handbucherstellungseinheit (721) konfiguriert ist, basierend auf der empfangenen Bedienung durch die Bedienungseinheit (750) Zeicheninformationen zu erzeugen und das Verfahrenshandbuch (9) einschließlich der Zeicheninformationen zu erstellen.

4. Spritzgießmaschine (1) nach einem der Ansprüche 1 bis 3,
wobei die Handbucherstellungseinheit (721) konfiguriert ist, das Verfahrenshandbuch (9) einschließlich Sprachinformationen zu erstellen, die von einem externen Mikrophon (771) aufgenommen werden.

5. Spritzgießmaschine (1) nach Anspruch 4,
wobei die Handbucherstellungseinheit (721) konfiguriert ist, die Sprachinformationen, die von einem externen Mikrophon (771) aufgenommen werden, in Zeicheninformationen umzuwandeln und das Verfahrenshandbuch (9) einschließlich der Zeicheninformationen zu erstellen.

6. Spritzgießmaschine (1) nach einem der Ansprüche 1 bis 5,
wobei die Handbucherstellungseinheit (721) konfiguriert ist, das Verfahrenshandbuch (9) einschließlich Bildinformationen, die von einer externen Kamera (772) aufgenommen werden, zu erstellen.

7. Spritzgießmaschine (1) nach einem der Ansprüche 1 bis 6,
wobei die Handbucherstellungseinheit (721) konfiguriert ist, das Verfahrenshandbuch (9) zu erstellen, einschließlich eines zusammengesetzten Bildschirms auf dem Anzeigebildschirm (761, 781), der an einer Anzeigeeinheit (760) angezeigt wird, wenn die Bedienungseinheit (750) bedient wird, und eines erweiterten Bildschirms (782), der nicht an der Anzeigeeinheit (760) angezeigt wird, wenn die Bedienungseinheit (750) bedient wird.

8. Spritzgießmaschine (1) nach einem der Ansprüche 1 bis 7,
wobei die Steuerung (700) eine Speichereinheit (724) aufweist, die die von der Bedienungseinheit (750) empfangene Bedienung speichert, und
die Handbucherstellungseinheit (721) konfiguriert ist, basierend auf der in der Speichereinheit (724) gespeicherten Bedienung das Verfahrenshandbuch (9) zu erstellen.

9. Spritzgießmaschine (1) nach einem der Ansprüche 1 bis 8,
wobei die Bedienungseinheit (750) eine Startbedienungseinheit (751a) aufweist, die die Erstellung des Verfahrenshandbuchs (9) startet, und wenn die Startbedienungseinheit (751a) bedient wird, die Handbucherstellungseinheit (721) die Erstellung des Verfahrenshandbuchs (9) startet.

10. Spritzgießmaschine (1) nach einem der Ansprüche 1 bis 9,
wobei der Anzeigebildschirm (761, 781) ein Eingabefeld aufweist, in das von der Bedienungseinheit (750) ein Eingabewert eingegeben wird, und
wenn der Eingabewert in das Eingabefeld eingegeben wird, die Handbucherstellungseinheit (721) den Anzeigebildschirm (761, 781) nach der Eingabe in das Verfahrenshandbuch (9) beinhaltet.

11. Spritzgießmaschine (1) nach einem der Ansprüche 1 bis 10,
wobei die Bedienungseinheit (750) eine Umschaltbedienungseinheit zum Umschalten des Anzeigebildschirms (761, 781) aufweist,
die Steuerung (700) eine Anzeigebildschirmsteuerungseinheit (711) aufweist, die den Anzeigebildschirm (761, 781) steuert,
wenn die Umschaltbedienungseinheit bedient wird, die Anzeigebildschirmsteuerungseinheit (711) den Anzeigebildschirm (761, 781) umschaltet, und
wenn die Umschaltbedienungseinheit bedient wird, die Handbucherstellungseinheit (721) den Anzeigebildschirm (761, 781) vor Umschalten in dem Verfahrenshandbuch (9) beinhaltet.

## Revendications

1. Une machine de moulage par injection (1) comprenant :
une unité d'opération (750) configurée pour recevoir une opération d'un écran d'affichage (761, 781) et/ou une opération visant à faire fonctionner la machine de moulage par injection (1) ; et
un contrôleur (700) configuré pour mettre en œuvre une commande selon l'opération reçue par l'unité d'opération (750),
**caractérisée en ce que** :
le contrôleur (700) inclut une unité de création de manuel (721) qui est configurée de manière à créer un manuel de procédure (9) connexe à l'opération reçue par l'unité d'opération (750) sur la base de l'opération reçue par l'unité d'opération (750).

2. La machine de moulage par injection (1) selon la revendication 1,
dans laquelle l'unité de création de manuel (721) est configurée pour créer le manuel de procédure (9) en incluant une image fixe et/ou une image animée de l'opération reçue par l'unité d'opération (750).

3. La machine de moulage par injection (1) selon la revendication 1 ou 2,
dans laquelle l'unité de création de manuel (721) est configurée pour générer des informations de caractère sur la base de l'opération reçue par l'unité d'opération (750), et à créer le manuel de procédure (9) en incluant les informations de caractère.

4. La machine de moulage par injection (1) selon l'une quelconque des revendications 1 à 3,
dans laquelle l'unité de création de manuel (721) est configurée pour créer le manuel de procédure (9) en incluant des informations vocales enregistrées par un microphone externe (771).

5. La machine de moulage par injection (1) selon la revendication 4,
dans laquelle l'unité de création de manuel (721) est configurée pour convertir les informations vocales, enregistrées par le microphone externe (771), en des informations de caractère, et à créer le manuel de procédure (9) en incluant les informations de caractère.

6. La machine de moulage par injection (1) selon l'une quelconque des revendications 1 à 5,
dans laquelle l'unité de création de manuel (721) est configurée pour créer le manuel de procédure (9) en incluant des informations d'image capturées par une caméra externe (772).

7. La machine de moulage par injection (1) selon l'une quelconque des revendications 1 à 6,
dans laquelle l'unité de création de manuel (721) est configurée pour créer le manuel de procédure (9) en incluant un écran composite de l'écran d'affichage (761, 781) affiché sur une unité d'affichage (760) lorsque l'unité d'opération (750) est exploitée, et un écran étendu (782) non affiché sur l'unité d'affichage (760) lorsque l'unité d'opération (750) est exploitée.

8. La machine de moulage par injection (1) selon l'une quelconque des revendications 1 à 7,
dans laquelle le contrôleur (700) présente une unité de stockage (724) qui stocke l'opération reçue par l'unité d'opération (750) ; et
l'unité de création de manuel (721) est configurée de manière à créer le manuel de procédure (9) sur la base de l'opération stockée dans l'unité de stockage (724).

9. La machine de moulage par injection (1) selon l'une quelconque des revendications 1 à 8,
dans laquelle l'unité d'opération (750) présente une unité d'opération de démarrage (751a) qui démarre la création du manuel de procédure (9) ; et
lorsque l'unité d'opération de démarrage (751a) est exploitée, l'unité de création de manuel (721) démarre la création du manuel de procédure (9).

10. La machine de moulage par injection (1) selon l'une quelconque des revendications 1 à 9,
dans laquelle l'écran d'affichage (761, 781) présente un champ d'entrée auquel une valeur d'entrée est appliquée en entrée par l'unité d'opération (750) ; et
lorsque la valeur d'entrée est appliquée en entrée au champ d'entrée, l'unité de création de manuel (721) inclut l'écran d'affichage (761, 781) après l'entrée dans le manuel de procédure (9).

11. La machine de moulage par injection (1) selon l'une quelconque des revendications 1 à 10,
dans laquelle l'unité d'opération (750) présente une unité d'opération de commutation destinée à commuter l'écran d'affichage (761, 781) ;
le contrôleur (700) présente une unité de commande d'écran d'affichage (711) qui commande l'écran d'affichage (761, 781) ;
lorsque l'unité d'opération de commutation est exploitée, l'unité de commande d'écran d'affichage (711) commute l'écran d'affichage (761, 781) ; et
lorsque l'unité d'opération de commutation est exploitée, l'unité de création de manuel (721) inclut l'écran d'affichage (761, 781) avant la commutation dans le manuel de procédure (9).
